Europäisches Patentamt

**European Patent Office**

**Office européen des brevets**

(11) Publication number: **0 154 286**
**A1**

# (12) EUROPEAN PATENT APPLICATION

(21) Application number: **85102110.5**

(22) Date of filing: **26.02.85**

(51) Int. Cl.⁴: **F 16 B 5/00**
**F 16 B 7/00**

(30) Priority: **27.02.84 DK 1074/84**

(43) Date of publication of application:
**11.09.85 Bulletin 85/37**

(84) Designated Contracting States:
**AT BE CH DE FR GB IT LI LU NL SE**

(71) Applicant: **Aktieselskabet Laur. Knudsen Nordisk Elektricitets Selskab**
**Haraldsgade 53**
**DK-2100 Kopenhagen O(DK)**

(72) Inventor: **Pedersen, Kurt Flemming Lindegaard**
**Hjortespringet 1**
**DK-3400 Hillerod(DK)**

(74) Representative: **Vossius Vossius Tauchner Heunemann Rauh**
**Siebertstrasse 4 P.O. Box 86 07 67**
**D-8000 München 86(DE)**

(54) A coupling device for structural members.

(57) Two structural members (1,2) having contiguous parts thereof provided with holes or openings may be tightened together and simultaneously mutually aligned by means of an elongate member of U-shaped cross section which is inserted in the holes of the structural members (1,2). The side flanges of the U-shaped profile have been removed over a short distance adjacent one of the limitations of a structural member (2) in order to form notches (8). The tightening together of the two structural members (1,2) is achieved by bending the protruding part of the coupling device upwards to bend the bottom flange (6) adjacent the notches (8).

Fig.3.

our rel.: 1 002 LF
Case: 6190/EOC/hh
AKTIESELSKABET LAUR. KNUDSEN,, NORDISK ELEKTRICITETS SELSKAB
Copenhagen, Denmark

0154286

1

## A COUPLING DEVICE FOR STRUCTURAL MEMBERS.

The present invention relates to a coupling device for tightening together two structural members having contiguous parts provided with holes or openings which can be brought to a level line and in which said holes or openings have at least one straight limitation.

The most stable and simplest coupling device for joining two structural members and aligning them simultaneously is a tight fitting bolt provided with a washer and a nut which is tightened by means of a suitable tool. However, in many cases the location of the coupling devices makes the use of tools cumbersome or at least slow. Especially in constructions designed to include a lot of identical modules which are to be assembled, a considerable number of coupling devices is needed. However, due to storing problems it is not desirable to circumvent the problem of having many cumbersome joints by using modules of different sizes.

It is an object of the present invention to provide a coupling and an alignment device which is much more simple in use than similar prior art devices and which at the same time is very inexpensive in manufacture.

Accordingly, the present invention provides a coupling device shaped like an elongate profile having a head member in one end thereof and a substantially U-shaped cross section. The bottom flange of the profile has a width which corresponds to said straight limitation of the holes, and the side flanges of the profile is at a distance from the head member which corresponds to the total thickness of the contiguous parts, provided with notches or cut outs which permit a bending of the bottom flange of the coupling device.

The notches or cut outs may, according to an embodiment of the invention, extend substantially symmetrically into the bottom flange which permit an adjustment of the joining force to the metal thickness of the coupling device.

To permit individual adaptation of the length of the coupling device a further embodiment of the coupling device may be designed identically at both ends, and the head member may be provided by bending off the bottom flange at one end thereof.

Another embodiment of the coupling device has its head member co-operating with the edges of the holes in one of the structural members in such a manner that a protrusion thereof from said hole is prevented which makes one end of the joint touch-proof as protruding parts are avoided.

A more complete understanding of the present invention can be had by referring to the following drawings and detailed description of the invention in which:

FIG. 1a is a side view of a coupling device of the present invention,

FIG. 1b is a top view of the device shown in FIG. 1a,

FIG. 1c is an end view of the device shown in Figs. 1a and 1b and placed in an opening of a structural member,

FIG. 2 is a side view of the coupling device of the present invention used as an alignment device, and

FIG. 3 is a side view of the coupling device shown in FIG. 2 in a situation in which the tightening process has been completed.

The present invention is based on the fact that a profiled member is very bending resistant and that a removal of the strength-giving side flanges makes the bottom flange very week compared to the profile itself.

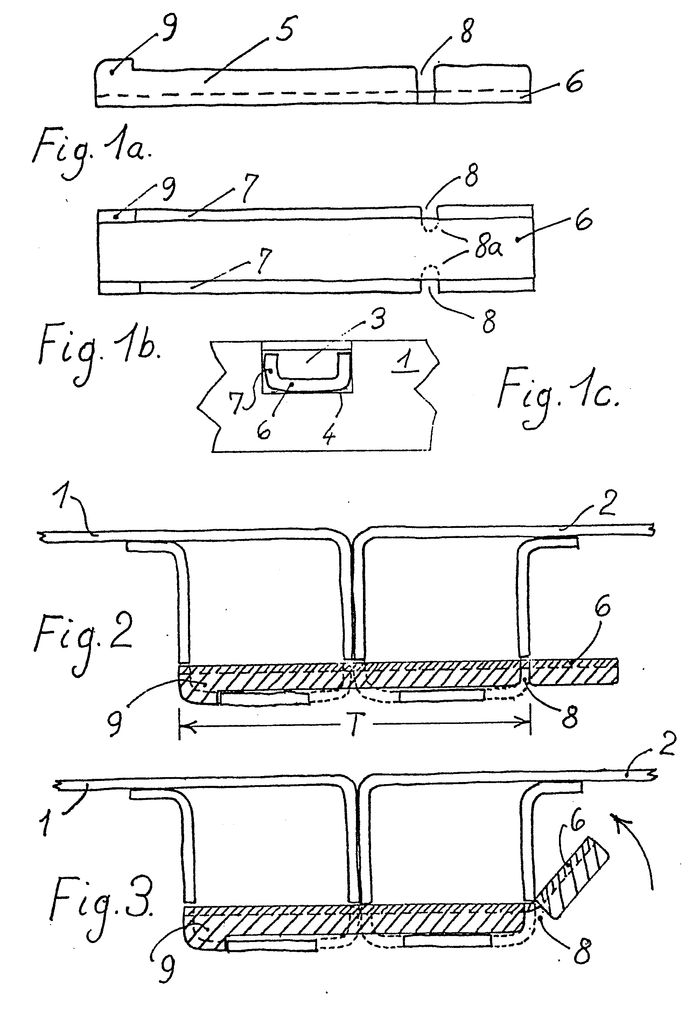

FIG. 1a shows a coupling device 5 of the present invention being constructed as a substantially U-shaped profile including a bottom flange 6 and two side flanges 7. Notches or cut outs 8 have been provided in a well defined place in the side flanges 7 which locally weakens the coupling device.

FIG. 1b shows the coupling device from above. The location of the notches 8 depends on the length over which the coupling or tightening is to be carried out. Assuming structural members which are compression resistant in the longitudinal direction of the coupling device this implies that the notches or cut outs are to be located in accordance with the total thickness T of the structural members which are to be assembled.

FIG. lc illustrates a typical hole or opening 3 provided in a structural member 1 in which hole is inserted the coupling device with the bottom flange 6 resting on a straight limitation 4 of the hole.

FIG. lb shows the notches 8 being extended into the bottom flange 6 as indicated in the positions 8a. This feature permits the assembling or joining force becoming independent on the thickness of the bottom flange 6 as both factors are decided upon when manufacturing the coupling device.

To ensure a proper alignment of the parts when joining two structural members 1 and 2, respectively, the coupling device has to fit tightly in the holes or openings 3. This is illustrated in FIG. 2 from which it appears that the coupling device comprises a head member 9 provided with a rounded neck following the contour of the corresponding structural member 1. Thus, protruding parts on this side of the assembly are avoided.

FIG. 3 illustrates the manner in which the joining or squeezing of the parts is obtained. Having finished the alignment of the parts the protruding part of the coupling device is pushed upwards in order to expand the notches 8. Only a local bending of the bottom flange 6 adjacent the notches 8 takes place. A suitable lever for the bending process is obtained by pushing on the protruding part of the device at its outermost end.

It is, according to the present invention, possible to adapt a coupling device to structural members to be assembled even if their total thickness T is unknown on beforehand. This may be optained by providing the notches 8 on the spot after an initial measuring. The procedure is in practice as follows: A piece of preformed, U-shaped member the length of which corresponds to an estimated total thickness T plus additional protruding lengths in both ends is to start with cut-off. Then the distance T is measured accurately and notches 8 are provided e.g. by sawing on two locations of said piece seeing that the distance between the locations corresponds to the measured distance T. The cut-off piece is then inserted into the holes for the aligment of the parts to be assembled and it is ensured that the notches are in line with the opposite side walls of the parts to be joined. Finally, the protruding ends of said piece is pushed to open the notches and bend the bottom flange 6 thus squeezing the structural members 1 and 2 together.

Above, only U-shaped profiles have been described. However, the advantages mentioned may evidently be obtained by means of hollow profiles as well.

C L A I M S

1. A coupling device for tightening together two structural members (1,2) having contiguous parts provided with holes or openings (3) which can be brought to a level line and in which said holes or openings have at least one straight limitation (4), c h a r a c t e - r i z e d in that said device (5) is an elongate profile having a head member (9) in one end thereof and having a substantially U-shaped cross section the bottom flange (6) of which having a width corresponding to said straight limitation of the holes (4), and in that the side flanges (7) at a distance from said head member (9) which corresponds to the total thickness (T) of the contiguous parts of said structural members (1,2) is provided with notches or cut outs (8) permitting a bending of the bottom flange (6) of the coupling device (5).

2. The coupling device of claim 1, c h a r a c t e r i z e d in that said notches or cut outs (8) extend substantially symmetrically (as at 8a) into the bottom flange (6).

3. The coupling device of claim 1 or 2, c h a r a c t e r i z e d by being identical at both ends and in that said head member (9) is provided by bending off the bottom flange (6) at one end thereof.

4. The coupling device of any of claims 1 to 3, characterized by said head member (9) co-operating with the edges of said holes (3) in one of said structural members (1) in such a manner that a protrusion thereof from said hole is prevented.

Fig. 1a.

Fig. 1b.

Fig. 1c.

Fig. 2

Fig. 3.

European Patent
Office

**EUROPEAN SEARCH REPORT**

| | DOCUMENTS CONSIDERED TO BE RELEVANT | | EP 85102110.5 |
|---|---|---|---|
| Category | Citation of document with indication, where appropriate, of relevant passages | Relevant to claim | CLASSIFICATION OF THE APPLICATION (Int Cl 4) |
| A | GB - A - 1 396 924 (ARTHUR AURELIUS XAVERIUS SILVIUS) <br><br> * Claims 1,5; page 1, lines 70-75 * <br><br> -- | 1 | F 16 B 5/00 <br> F 16 B 7/00 |
| A | GB - A - 2 111 633 (BRUYNZEEL INTERSYTEEM BV) <br><br> * Abstract * <br><br> ---- | 1 | |

TECHNICAL FIELDS
SEARCHED (Int Cl 4)

F 16 B

The present search report has been drawn up for all claims

| Place of search | Date of completion of the search | Examiner |
|---|---|---|
| VIENNA | 17-05-1985 | HEIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82